(19) Europäisches Patentamt
European Patent Office
Office européen des brevets

(11) **EP 4 714 761 A1**

(12) **EUROPÄISCHE PATENTANMELDUNG**

(43) Veröffentlichungstag:
**25.03.2026   Patentblatt 2026/13**

(21) Anmeldenummer: **25199579.1**

(22) Anmeldetag: **02.09.2025**

(51) Internationale Patentklassifikation (IPC):
**B60T 7/22** *(2006.01)*      **B60T 8/1755** *(2006.01)*
**B60W 30/095** *(2012.01)*

(52) Gemeinsame Patentklassifikation (CPC):
**B60W 30/0953; B60T 7/22; B60T 8/17558;**
B60T 2201/022; B60W 2520/10; B60W 2520/125;
B60W 2720/106

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität:  **18.09.2024   DE 102024208949**

(71) Anmelder: **VOLKSWAGEN AG**
**38440 Wolfsburg (DE)**

(72) Erfinder:
• **Klingemann, Timo**
  **38440 Wolfsburg (DE)**
• **Milch, Stefan**
  **38440 Wolfsburg (DE)**

(54) **VERFAHREN ZUM ANPASSEN EINER BREMSVERZÖGERUNG FÜR EIN KRAFTFAHRZEUG**

(57)   Die Erfindung nennt ein Verfahren zum Anpassen einer Bremsverzögerung für ein Kraftfahrzeug (2), wobei das Kraftfahrzeug (2) ein Notfallsystem (4) zur Kollisionsvermeidung mit einer zugehörigen Verkehrssensorik (6) zum Erfassen einer Verkehrssituation und ein Kraftsensorsystem (15) zum Erfassen von am Kraftfahrzeug (2) und/oder an einzelnen Achsen und/oder Rädern jeweils wirkenden Kräften umfasst, wobei in Reaktion auf eine durch das Notfallsystem (4) erfasste kritische Fahrsituation ein Ausweichmanöver eingeleitet wird, und für das Ausweichmanöver eine optimale Bremsverzögerung ermittelt wird, wobei eine aktuelle Fahrgeschwindigkeit (v) des Kraftfahrzeugs (2) ermittelt wird, und mittels des Kraftsensorsystems (15) ein Wert einer Querbeschleunigung (ay) des Kraftfahrzeugs (2) ermittelt wird, wobei anhand des Wertes der Querbeschleunigung (ay) ein Sollwert einer querbeschleunigungsabhängigen Bremsverzögerung (axy) bestimmt wird, und anhand der Fahrgeschwindigkeit (v) ein Sollwert einer geschwindigkeitsabhängigen Bremsverzögerung (axv) bestimmt wird, und wobei die optimale Bremsverzögerung anhand des Sollwertes der querbeschleunigungsabhängigen Bremsverzögerung (axy) und des Sollwertes der geschwindigkeitsabhängigen Bremsverzögerung (axv) derart ermittelt wird, dass die optimale Bremsverzögerung als mathematische Funktion der Variablen Fahrgeschwindigkeit (v) und Querbeschleunigung (ay) ein entgegengesetztes Monotonieverhalten bezüglich dieser Variablen aufweist.

Fig. 2

**Beschreibung**

Die Erfindung betrifft ein Verfahren zum Anpassen einer Bremsverzögerung für ein Kraftfahrzeug, wobei das Kraftfahrzeug ein Notfallsystem zur Kollisionsvermeidung mit einer zugehörigen Verkehrssensorik zum Erfassen einer Verkehrssituation und ein Kraftsensorsystem zum Erfassen von am Kraftfahrzeug und/oder an einzelnen Achsen und/oder Rädern jeweils wirkenden Kräften umfasst, wobei in Reaktion auf eine durch das Notfallsystem erfasste kritische Fahrsituation ein Ausweichmanöver eingeleitet wird, und für das Ausweichmanöver eine optimale Bremsverzögerung ermittelt wird.

In Kraftfahrzeugen werden zunehmend einzelne Fahrfunktionen automatisch gesteuert, insbesondere bei klar definierbaren Funktionen in abgrenzbaren, wiederkehrenden Verkehrssituationen. Es existieren einerseits auch Fahrassistenzsysteme, die einen Fahrer lediglich in seiner Wahrnehmung einer Verkehrssituationen und ihrer Bewertung unterstützen, indem bei einer bestimmten Bedingung oder einem bestimmten Fahrverhalten des Fahrers ein akustisches Warnsignal oder ein haptisches Feedback (über das Lenkrad, etwa als Vibration) an den Fahrer ausgegeben wird (beim Nähern eines Begrenzungsstreifens im Fall eines Spurhaltewarnsystem). Andererseits können einzelne Fahrfunktionen auch direkt durch ein automatisches System gesteuert werden, wenn dies die zu steuernde Fahrfunktion entweder erlaubt (etwa bei einem Abstandsregeltempomaten bzw. einer adaptiven Geschwindigkeitsregelung), oder wenn es die Komplexität und/oder Gefahrenlage der Verkehrssituationen erfordert (etwa durch eine kurze verbleibende Reaktionszeit).

Ein solches System zur direkten Steuerung einzelner Fahrfunktionen wird über meist optische Sensoren, welche ggf. auch auf unterschiedlichen physikalischen Prinzipien basieren können, ein Umfeld und insbesondere eine umgebende Verkehrssituation eines Kraftfahrzeugs erfasst. Anhand einer Analyse der hierbei erzeugten Bilddaten, welche bevorzugt eine Objekterkennung beinhaltet, wird eine Entscheidung über ein Ansteuern der vorgesehenen Fahrfunktion getroffen.

Eine derartige assistierte bzw. automatisierte Steuerung ist insbesondere auch für die Vermeidung von Kollisionen in Notfällen bekannt. In einem derartigen System wird über eine Verkehrssensorik, welche u.a. die o.g. Sensoren aufweist, eine kritische Verkehrssituation erkannt, in welcher ohne eine Änderung des Fahrverhaltens eine Kollision unmittelbar droht, und entsprechend ein Fahrmanöver zur Vermeidung der drohenden Kollision automatisch angesteuert. Ein solches Fahrmanöver kann je nach konkreter Verkehrssituation, also insbesondere abhängig von der verbleibenden Zeit bis zur Kollision sowie von ggf. weiteren Verkehrsteilnehmern, die bei der Planung des Fahrmanövers zu berücksichtigen sind, in einem starken Abbremsen oder in einer Ausweichbewegung bestehen.

Dieses Spannungsfeld zwischen Ausweichmanöver und reinem Bremsvorgang sowie mögliche Lösungsansätze hierfür sind u.a. aus der DE 10 2015 205 673 A1 und der DE 10 2008 005 305 A1 bekannt.

Es ist Aufgabe der vorliegenden Erfindung, die genannten Lösungsansätze zu verbessern, und insbesondere ein Verfahren zum Anpassen einer Bremsverzögerung für ein Kraftfahrzeug anzugeben, welches hinsichtlich eines potentiellen Ausweichmanövers eine optimale Querdynamik erlaubt.

Die genannte Aufgabe wird erfindungsgemäß gelöst durch ein Verfahren zum Anpassen einer Bremsverzögerung für ein Kraftfahrzeug (Kfz), wobei das Kraftfahrzeug ein Notfallsystem zur Kollisionsvermeidung mit einer zugehörigen Verkehrssensorik zum Erfassen einer Verkehrssituation und ein Kraftsensorsystem zum Erfassen von am Kfz und/oder an einzelnen Achsen und/oder Rädern jeweils wirkenden Kräften umfasst, wobei in Reaktion auf eine durch das Notfallsystem erfasste kritische Fahrsituation ein Ausweichmanöver eingeleitet wird, und für das Ausweichmanöver eine optimale Bremsverzögerung ermittelt wird, und wobei eine aktuelle Fahrgeschwindigkeit des Kfz ermittelt wird, und mittels des Kraftsensorsystems ein Wert einer Querbeschleunigung des Kfz ermittelt wird.

Verfahrensgemäß ist vorgesehen, dass anhand des Wertes der Querbeschleunigung ein Sollwert einer querbeschleunigungsabhängigen Bremsverzögerung bestimmt wird, und anhand der Fahrgeschwindigkeit ein Sollwert einer geschwindigkeitsabhängigen Bremsverzögerung bestimmt wird, wobei die optimale Bremsverzögerung anhand des Sollwertes der querbeschleunigungsabhängigen Bremsverzögerung und des Sollwertes der geschwindigkeitsabhängigen Bremsverzögerung derart ermittelt wird, dass die optimale Bremsverzögerung als mathematische Funktion der Variablen Fahrgeschwindigkeit und Querbeschleunigung ein entgegengesetztes Monotonieverhalten bezüglich dieser Variablen aufweist. Vorteilhafte und teils für sich gesehen erfinderische Ausgestaltungen sind Gegenstand der nachfolgenden Beschreibung und der Unteransprüche.

Unter einem Kfz ist hierbei insbesondere jedwedes Fahrzeug mit einem Verbrennungsmotor im Antriebsstrang und/oder einem Elektroantrieb umfasst (also auch ein Fahrzeug mit Hybridantrieb), wobei a priori jedwede der üblichen Fahrzeuggrößen vorliegen kann, also insbesondere ein PKW oder ein LKW.

Unter einem Notfallsystem zur Kollisionsvermeidung ist insbesondere ein System umfasst, welches dazu ausgelegt und eingerichtet ist, mittels der Verkehrssensorik eine Verkehrssituation zu erfassen und mittels einer Steuereinheit, welche insbesondere entsprechende Rechnerkomponenten wie CPU und durch die CPU adressierbaren Arbeitsspeicher aufweist, die Verkehrssituation hinsichtlich einer kritischen Fahrsituation zu bewerten.

Die Verkehrssensorik umfasst bevorzugt eine Anzahl an Sensoren, die dazu eingerichtet sind, die das Kfz umgebende Verkehrssituation zu erfassen, und hierbei insbesondere dazu eingerichtet sind, eine Straßenführung und andere Fahrzeuge sowie ggf. sonstige Verkehrsteilnehmer (wie etwa Fußgänger oder Fahrradfahrer) und sonstige Hindernisse auf der Fahrbahn sowie bevorzugt in deren unmittelbarer Umgebung zu erfassen und zu erkennen Bevorzugt umfasst die Anzahl der Sensoren jeweils wenigstens einen optischen Sensor und besonders bevorzugt jeweils mehrere optischen Sensor in Fahrtrichtung des Kfz und in Richtung des Bereiches hinter dem Kfz gerichtet ist. Besonders bevorzugt umfassen die besagten optischen Sensoren jeweils wenigstens eine Kamera und/oder ein Radar und/oder ein Lidar. Die Verkehrssensorik umfasst zum Erfassen der Verkehrssituation insbesondere auch eine Auswerteeinheit, welche dazu eingerichtet ist, die von den optischen Sensoren erzeugten Bilddaten auf o.g. Straßenführung und anderen Fahrzeuge usw. auszuwerten, vorzugsweise mittels einer Bilderkennung. Die entsprechend ausgewerteten Bilddaten werden dann von der Steuereinheit in o.g. Weise hinsichtlich einer kritischen Fahrsituation bewertet, wobei insbesondere auch Fahrdaten anderer Fahrzeuge (wie etwa jeweils Geschwindigkeit und ggf. Beschleunigung) aus dem zeitlichen Verlauf der ausgewerteten Bilddaten bestimmt werden.

Unter einer kritischen Fahrsituation ist hierbei insbesondere eine Gefahrenlage einer unmittelbar bevorstehenden Kollision in der vorliegenden Verkehrssituation umfasst. Die Kollision gilt dabei insbesondere als unmittelbar bevorstehend, wenn sie ohne eine Änderung des Fahrverhaltens (also u.a. Fahrspur sowie Geschwindigkeit und ggf. Beschleunigung) des Kfz oder des Fahrverhalten eines anderen Fahrzeugs mit hinreichend hoher Sicherheit (also z.B. 95% oder 99% Konfidenz) eintreten wird, und unter diesen Umständen (also gleichbleibendes Fahrverhalten aller beteiligten) die verbleibende Zeit bis zur Kollision einen Grenzwert unterschritten hat. Ein solcher Grenzwert kann z.B. aus einem Intervall von 1s bis 5s gewählt werden. Unter einem Ausweichmanöver ist im Zusammenhang der kritischen Fahrsituation insbesondere ein Fahrmanöver umfasst, welches einen Fahrspur- und/oder Richtungswechsel des Kfz beinhaltet, und welches unter ansonsten gleichbleibendem Fahrverhalten anderer Verkehrsteilnehmer dazu eingerichtet ist, die unmittelbar bevorstehende Kollision zu vermeiden oder wenigstens ihre Wahrscheinlichkeit signifikant (also bspw. um mindestens 50% oder mindestens 75%) zu verringern.

Im Rahmen des Verfahrens werden nun die aktuelle Fahrgeschwindigkeit und ein Wert einer Querbeschleunigung des Kfz ermittelt. Die aktuelle Fahrgeschwindigkeit des Kfz wird hierbei insbesondere durch die im normalen Fahrbetrieb üblichen Maßnahmen der Tachometrie ermittelt. Die Querbeschleunigung kann hierbei einerseits durch eine vom Fahrer des Kfz selbst vorgenommene Fahrbewegung (insbesondere in Reaktion auf die kritische Fahrsituation) oder andererseits auch infolge einer Kurvenfahrbewegung (welche insbesondere durch die Ausweichbewegung selbst gegeben sein kann) von Null verschieden sein. Das Kraftsensorsystem kann hierbei die Querbeschleunigung insbesondere anhand von einem oder mehreren Beschleunigungssensoren messen.

Anhand des ermittelten Wertes der Querbeschleunigung des Kfz wird nun ein Sollwert einer querbeschleunigungsabhängigen Bremsverzögerung bestimmt, und anhand der Fahrgeschwindigkeit (folgend auch nur "Geschwindigkeit") des Kfz ein Sollwert einer geschwindigkeitsabhängigen Bremsverzögerung. Die querbeschleunigungsabhängige Bremsverzögerung ist hierbei insbesondere eine Bremsverzögerung in Fahrtrichtung (also eine negative Beschleunigung in "Längsrichtung"), welche hierbei in Abhängigkeit der Querbeschleunigung ermittelt wird. Hierbei gibt die querbeschleunigungsabhängigen Bremsverzögerung insbesondere die fahrphysikalischen Zusammenhänge zwischen Längs- und Querverzögerung und ihre Auswirkungen auf die Querdynamik wieder. Insbesondere wird bei der Bestimmung des Sollwertes der querbeschleunigungsabhängigen Bremsverzögerung versucht, die vektorielle Summe aus Seitenführungskraft und Bremskraft möglichst konstant zu halten.

Für die geschwindigkeitsabhängige Bremsverzögerung gilt jedoch insbesondere auch: Bei hoher Fahrgeschwindigkeit kann mit demselben Lenkwinkel (Lenkwinkelgradienten) innerhalb einer bestimmten, durch die verbleibende Zeit bis zur Kollision gegebenen Manöverzeit mehr Querversatz aufgebaut werden als bei niedriger Fahrgeschwindigkeit. Ist nun Querdynamik beispielsweise über einen Lenkwinkelgradienten begrenzt, so ist das Potential zum Querversatzaufbau bei hoher Fahrgeschwindigkeit größer als bei niedriger Fahrgeschwindigkeit. Dies kann nun zur Bestimmung des Sollwertes der geschwindigkeitsabhängigen Bremsverzögerung dahingehend verwendet werden, dass bei höheren Geschwindigkeiten der Verlust der Querdynamik infolge eines stärkeren Abbremsens und der daraus resultierenden geringeren Querbeschleunigung begrenzt bleibt.

Die optimale Bremsverzögerung wird dann unter Berücksichtigung dieses Zusammenhangs anhand des Sollwertes der querbeschleunigungsabhängigen Bremsverzögerung und des Sollwertes der geschwindigkeitsabhängigen Bremsverzögerung ermittelt, vorzugsweise als mathematische Funktion der besagten querbeschleunigungs- und geschwindigkeitsabhängigen Bremsverzögerung, und somit auch als mathematische Funktion der ihnen jeweils zugrunde liegenden Variablen Querbeschleunigung und Geschwindigkeit. Dem hier beschriebene Zusammenhang zwischen diesen beiden Variablen und ihrem einzelnen Einfluss (ceteris paribus) auf die jeweiligen Sollwerte der Bremsverzögerungen wird dabei dadurch Rechnung getragen, dass die optimale Bremsverzögerung als mathematische Funktion der Variablen Fahrgeschwindigkeit und Querbeschleunigung ein entgegengesetztes Monotonieverhalten bezüglich dieser Variablen aufweist.

Das Monotonieverhalten einer Funktion ist hierbei und im folgenden zu verstehen als die Information, ob eine Funktion für ein Anwachsen bzw. Ansteigen einer bestimmten Variablen einen monoton steigenden oder monoton fallenden Verlauf hat (also selbst steigt oder zumindest gleich bleibt bzw. fällt oder zumindest gleich bleibt).

Grundsätzlich ist in kritischen Fahrsituationen ein schnelles Abbremsen und somit ein hoher Wert einer Bremsverzögerung sinnvoll. Aus den o.g. Gründen der Querdynamik, da insbesondere auch die Summe der von einem Reifen auf die Fahrbahn übertragenen Brems- und Querkräfte durch den Schlupf begrenzt und somit endlich ist, kann es von Vorteil sein, insbesondere für ein Ausweichmanöver die Bremsverzögerung in Längsrichtung nicht zu maximieren. Jedoch kann gerade bei hohen Fahrgeschwindigkeiten auch mit geringerer Querbeschleunigung fallweise ein ausreichend hoher Querversatz aufgebaut werden, um eine Kollision zu vermeiden.

Das von der Erfindung vorgegebene Vorgehen trägt dem Rechnung, und drückt dies in einem mathematischen Zusammenhang zwischen dem Verhalten der optimalen Bremsverzögerung und den charakterisierenden Fahrvariablen Querbeschleunigung und Geschwindigkeit aus. Zweckmäßigerweise wird die optimale Bremsverzögerung derart ermittelt, dass sie für einen minimalen Betrag der querbeschleunigungsabhängigen Bremsverzögerung maximal wird, und/oder für einen maximalen Betrag der querbeschleunigungsabhängigen Bremsverzögerung minimal. Der minimale Betrag der querbeschleunigungsabhängigen Bremsverzögerung kann dabei insbesondere durch einen Maximalwert der Querbeschleunigung vorgegeben sein, welche durch das Kfz noch aufgenommen werden kann, bevor etwa ein Driften eintritt. Der maximale Betrag kann insbesondere durch den Maximalbetrag der Längsverzögerung (in Abwesenheit einer Querbeschleunigung) gegeben sein, welcher durch das Kfz noch aufgenommen werden kann. Die genannte Ausgestaltung gibt bei passender Wahl der geschwindigkeitsabhängigen Bremsverzögerung das gewünschte Monotonieverhalten der optimalen Bremsverzögerung hinsichtlich der Querbeschleunigung wieder.

Vorteilhafterweise wird die optimale Bremsverzögerung als eine konvexe Funktion der querbeschleunigungsabhängigen Bremsverzögerung und/oder als eine konkave Funktion der geschwindigkeitsabhängigen Bremsverzögerung ermittelt. Dies bedeutet insbesondere, dass die optimale Bremsverzögerung, interpretiert als eine Funktion nur der Variablen querbeschleunigungsabhängige Bremsverzögerung (also insbesondere für einen festen Wert der geschwindigkeitsabhängigen Bremsverzögerung) eine konvexe Funktion ist. Unter einer konvexen Funktion f (x) ist hierbei zu verstehen, dass für zwei Variablenwerte x1 < x2 gilt:

$$(i) \qquad f(t \cdot x1 + (1-t) \cdot x2) \leq t \cdot f(x1) + (1-t) \cdot f(x2)$$

Analog gilt Gleichung (i) für konkave Funktionen mit umgekehrtem Ungleichungszeichen ($\geq$).

Bevorzugt wird die optimale Bremsverzögerung ermittelt wird anhand eines gewichteten Mittelwertes, und/oder einer p-Norm, und/oder einer Extremwertbildung, in welche jeweils wenigstens die Sollwerte der querbeschleunigungsabhängigen Bremsverzögerung und der geschwindigkeitsabhängigen Bremsverzögerung eingehen. Unter einer Extremwertbildung ist die Bildung eines Maximums und die Bildung eines Minimums (jeweils aus einer Mehrzahl an Argumenten) umfasst. Die p-Norm $\| x \|_p$ für einen Vektor x mit n Elementen (Vektoreinträgen) xj definiert als

$$\| x \|_p := \left( \sum_{j=1}^{n} |x_n|^p \right)^{1/p} ,$$

wobei sich für p gegen $\infty$ als Spezialfall die Maximumsnorm ergibt, also die Bildung des Maximums aus den Vektoreinträgen xj. Die Bildung eines Maximums oder Minimums ist rechnerisch einfach zu bewerkstelligen; die Verwendung anderer p-Normen erlaubt ein Fein-Tuning, welches ggf. Zusammenhänge zwischen den einzelnen Variablen noch präziser abzubilden vermag.

Das vorgeschlagene Vorgehen umfasst insbesondere, dass für den Sollwert der querbeschleunigungsabhängigen Bremsverzögerung axy und den Sollwert der geschwindigkeitsabhängigen Bremsverzögerung av die optimale Bremsverzögerung axres ermittelt wird als

$$(ii) \qquad axres = max ( f (av), axy),$$

wobei f (av) eine bevorzugt monoton steigende Funktion von av ist.

Als vorteilhaft erweist es sich, wenn die querbeschleunigungsabhängige Bremsverzögerung axy gebildet wird anhand des negativen Quadrates $ay^2$ der Querbeschleunigung ay und anhand eines Initialwertes aymax (aymax < 0) mit insbesondere maximalem Betrag, also

$$(iii) \qquad axy = aymax + ky \cdot ay^2$$

mit einer geeigneten (durch Simulationen und/oder fahrphysikalische Tests zu bestimmenden) Konstanten ky, wobei aymax durch den Maximalbetrag der Längsverzögerung (in Abwesenheit einer Querbeschleunigung) gegeben sein kann, welcher durch das Kfz noch aufgenommen werden kann (aymax = - |amax|).

Besonders bevorzugt wird auch die geschwindigkeitsabhängige Bremsverzögerung axv gebildet anhand des (negativen) Quadrates $v^2$ der Geschwindigkeit v und anhand eines Initialwertes avmin (avmin < 0) mit insbesondere minimalem Betrag, also

$$(iv) \qquad axv = avmin - kv \cdot v^2$$

mit einer geeigneten Konstanten kv (vgl. die Konstante ky).

Als weiter vorteilhaft erweist es sich, wenn mittels der Verkehrssensorik ein Abstand d zu einem kritischen Objekt der kritischen Fahrsituation erfasst wird, und anhand des besagten Abstands d ein Sollwert einer abstandsabhängigen Bremsverzögerung axd ermittelt wird, wobei Ermittlung der optimalen Bremsverzögerung axres auch anhand des Sollwertes der abstandsabhängigen Bremsverzögerung axd erfolgt, und wobei die optimale Bremsverzögerung als mathematische Funktion der Variablen Abstand d dasselbe Monotonieverhalten aufweist wie bezüglich der Variablen Querbeschleunigung ay (und somit die optimale Bremsverzögerung mit abnehmenden Abstand monoton abnimmt). Insbesondere kann der Betrag der abstandsabhängigen Bremsverzögerung |axd| für einen minimalen Abstand d zum kritischen Objekt maximal sein. Unter einem kritischen Objekt ist hierbei insbesondere das Objekt umfasst, mit welchem in der kritischen Fahrsituation die Kollision droht (also insbesondere ein anderes Fahrzeug) und infolgedessen das Ausweichmanöver eingeleitet wird, aber auch ein anderes Objekt (Fahrzeug, anderer Verkehrsteilnehmer, Begrenzung/-Hindernis), mit welchem es im Rahmen des Ausweichmanövers ggf. zu einer Kollision kommen kann.

In einer vorteilhaften Ausgestaltung wird mittels der Verkehrssensorik eine Objektbeschleunigung aob des oder eines kritischen Objekts ermittelt, und anhand der Objektbeschleunigung aob ein Sollwert einer objektabhängigen Bremsverzögerung axo ermittelt, wobei die Ermittlung der optimalen Bremsverzögerung axres auch anhand des Sollwertes der optimalen Bremsverzögerung aob erfolgt, und wobei die optimale Bremsverzögerung axres als mathematische Funktion der Variablen Objektbeschleunigung aob ein entgegengesetztes Monotonieverhalten aufweist als bezüglich der Variablen Querbeschleunigung ay. Die Berücksichtigung einer Objektbeschleunigung des kritischen Objektes kann insbesondere in komplexen und unübersichtlichen Verkehrssituationen von Vorteil sein. Für eine Erhöhung der Objektbeschleunigung aob (also ihres Betrags) kann fallweise eine höhere Bremsverzögerung sinnvoll sein (auch wenn dies ggf. die Querdynamik beeinträchtigt).

Günstigerweise wird mittels des Kraftsensorsystems ein Wert einer Reibung (auch: Reibungswert) μ für das Kfz auf einer Straße ermittelt wird, und anhand des besagten Wertes der Reibung μ ein Sollwert einer reibungsabhängigen Beschleunigung axμ ermittelt, wobei die Ermittlung der optimalen Bremsverzögerung axres auch anhand des Sollwertes der reibungsabhängigen Bremsverzögerung axμ erfolgt, und wobei die optimale Bremsverzögerung axres als mathematische Funktion der Variablen Reibung μ ein entgegengesetztes aufweist als bezüglich der Variablen Querbeschleunigung av. Für die Ermittlung des Wertes der Reibung ist das Kraftsensorsystem insbesondere zum Erfassen von am an einzelnen Achsen und/oder Rädern des Kfz jeweils wirkenden Kräften eingerichtet, etwa mittels Sensoren jeweiligen des Schlupfes. Die Ermittlung des Wertes der Reibung μ kann dabei auf eine an sich im Stand der Technik bekannte Weise erfolgen. Insbesondere kann die reibungsabhängige Bremsverzögerung axμ für einen Reibungswert von μ = 0 ebenfalls Null betragen, was der Tatsache Rechnung trägt, dass bei verschwindender Reibung keine Bremsverzögerung möglich ist.

Als weiter vorteilhaft erweist es sich, wenn die optimale Bremsverzögerung axres gebildet wird anhand eines Maximums aus dem Sollwert der querbeschleunigungsabhängigen Bremsverzögerung axy, dem Sollwert der reibungsabhängigen Bremsverzögerung axμ und einer weiteren Funktion, welche ihrerseits gebildet wird anhand eines Minimums aus dem Sollwert der abstandsabhängigen Bremsverzögerung axd, dem Sollwert der geschwindigkeitsabhängigen Bremsverzögerung axv und dem Sollwert der objektabhängigen Bremsverzögerung axo, also bspw. in der Form

$$(v) \qquad axres = max ( min(axd, axv, axo), axμ, axy).$$

Eine derartige Ausgestaltung ist unter Berücksichtigung der beschriebenen Abhängigkeiten der verschiedenen Bremsverzögerungen geeignet, das gewünschte Monotonieverhalten der optimalen Bremsverzögerung von den zugrundeliegenden Größen zu erreichen.

Die Erfindung nennt weiter ein Kraftfahrzeug mit einem Notfallsystem zur Kollisionsvermeidung, welches eine zugehörige Verkehrssensorik zum Erfassen einer Verkehrssituation und einen Kraftsensorsystem zum Erfassen von am Kraftfahrzeug und/oder an einzelnen Achsen und/oder Rädern jeweils wirkenden Kräften umfasst, wobei das Notfallsystem dazu eingerichtet ist, das vorbeschriebene Verfahren durchzuführen. Insbesondere ist hierbei das Notfallsystem durch einen Prozessor und einen durch diesen adressierbaren Arbeitsspeicher sowie durch entsprechende Programmbefehle auf dem Arbeitsspeicher oder auf einem nicht-flüchtigen Speicher dazu eingerichtet, die im Verfahren erfolgenden Berechnungen durchzuführen.

Das erfindungsgemäße Kraftfahrzeug teilt die Vorzüge des erfindungsgemäßen Verfahrens. Die für das Verfahren und für seine Weiterbildungen angegebenen Vorteile können dabei sinngemäß auf das Kraftfahrzeug übertragen werden.

Nachfolgend wird ein Ausführungsbeispiel der Erfindung anhand von Zeichnungen näher erläutert. Hierbei zeigen jeweils schematisch:

Fig. 1    ein Kfz mit einem Notfallsystem zur Kollisionsvermeidung, und

Fig. 2    einzelne von verschiedenen Parametern abhängige Bremsverzögerungen, welche im Notfallsystem nach Fig. 1 für eine optimale Bremsverzögerung bei einem Ausweichvorgang herangezogen werden.

Einander entsprechende Teile und Größen sind in allen Figuren jeweils mit denselben Bezugszeichen versehen.

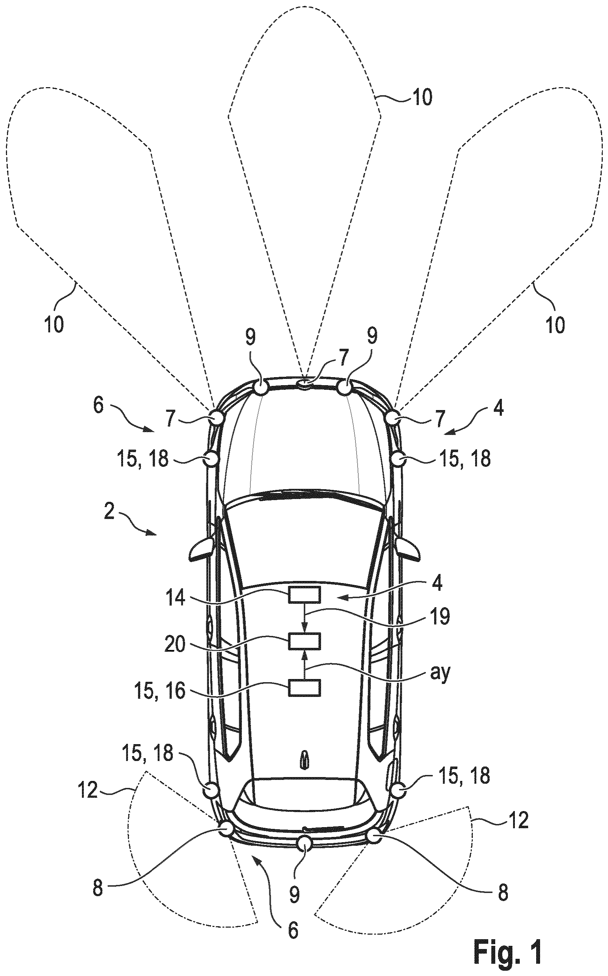

Figur 1 zeigt schematisch ein Kfz 2 mit einem Notfallsystem 4 zur Kollisionsvermeidung 4. Das Notfallsystem 4 umfasst eine Verkehrssensorik 6, mittels welcher eine nicht näher dargestellte Verkehrssituation erfasst wird, in welcher sich das Kfz 2 jeweils befindet. Die Verkehrssensorik 6 weist eine Anzahl an Frontkameras 7 und eine Anzahl an Heckkameras 8 auf. In der Figur 1 sind hierbei auch die Bildwinkel 10, 12 der Frontkameras 7 und der Heckkameras 8 schematisch dargestellt. Zusätzlich weist das die Verkehrssensorik 6 weitere Sensoren 9 zum Erfassen von Abständen und Geschwindigkeiten von Objekten in der Verkehrssituation auf, wobei diese Sensoren 9 insbesondere durch Radar- und/oder Lidar-Sensoren gegeben sein können, und die Objekte durch andere Fahrzeuge oder sonstige Verkehrsteilnehmer gegeben sein können, oder auch durch Hindernisse bzw. Begrenzungen in der Nähe einer Fahrspur.

Die einzelnen Kameras 7, 8 und Sensoren 9, der Verkehrssensorik 6 sind mit einer Auswerteeinheit 14 verbunden (die einzelnen Verbindungen sind zur besseren Übersichtlichkeit in Figur 1 nicht dargestellt), welche einerseits in den Bilddaten, welche von den Front- und Heckkameras 7, 8 erzeugt werden, eine Verkehrssituation (und somit die zugehörigen Objekte wie Straßenführung, Fahrzeuge usw.) konkret erkennt, und andererseits anhand der von den Sensoren 9 erzeugten Daten die Geschwindigkeiten und Beschleunigungen anderer Objekte, insbesondere anderer Verkehrsteilnehmer der Verkehrssituation ermittelt. Daten 19 der erfassten Verkehrssituation werden an eine Steuereinheit 20 des Notfallsystems 4 weitergegeben, in welcher erkannt wird, ob eine kritische Fahrsituation vorliegt, d.h., ob insbesondere eine Kollision mit einem anderen Fahrzeug, mit einem sonstigen Verkehrsteilnehmer oder mit einer Begrenzung bzw. einem Hindernis unmittelbar bevorsteht. Ist dies der Fall, leitet die Steuereinheit 20 automatisch ein Ausweichmanöver ein, für welches in noch zu beschreibender Weise auch die Fahrgeschwindigkeit des Kfz 2 durch eine optimale Bremsverzögerung reduziert wird.

Für die Durchführung dieses Verfahrens umfasst das Notfallsystem 4 auch ein Kraftsensorsystem 15, welches einen Querbeschleunigungssensor 16 sowie weitere Radsensoren 18 aufweist. Der Querbeschleunigungssensor 16 ist dazu eingerichtet, eine Querbeschleunigung ay zu erfassen, und an die Steuereinheit weiterzugeben. Die Radsensoren 18 sind dazu eingerichtet, u.a. eine Geschwindigkeit v des Kfz 2 sowie weiter an den Rädern wirkende Kräfte (wie z.B. Schlupf o.ä.) zu erfassen, sodass die Steuereinheit 20 aus diesen Kräften insbesondere einen Reibungswert berechnen kann.

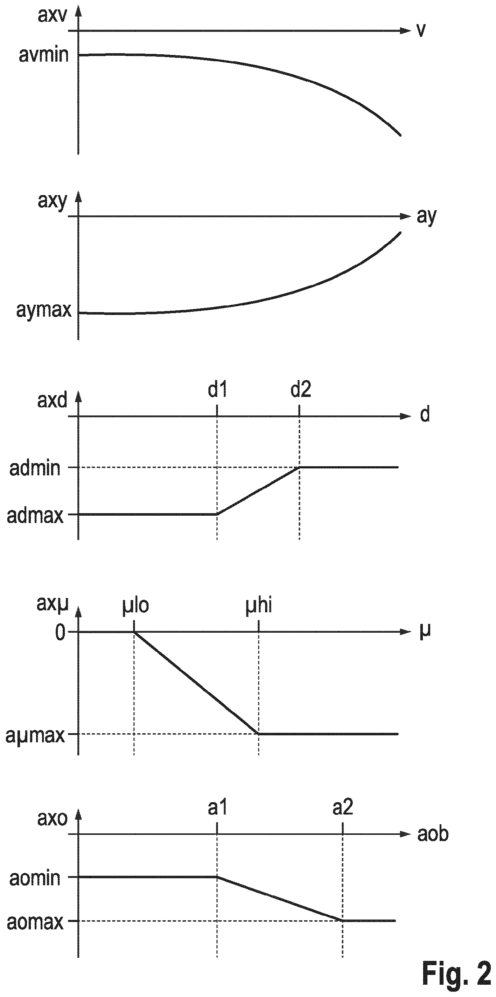

in Figur 2 sind schematisch jeweils in einem Diagramm eine geschwindigkeitsabhängige Bremsverzögerung axv, eine querbeschleunigungsabhängige Bremsverzögerung axy, eine abstandsabhängige Bremsverzögerung axd, eine reibungsabhängige Bremsverzögerung axμ und eine objektabhängige Bremsverzögerung axo dargestellt.

Die geschwindigkeitsabhängige Bremsverzögerung axv ist hierbei in Abhängigkeit einer Geschwindigkeit v des Kfz 2 nach Figur 1 dargestellt, und weist vorliegend die in Gleichung (iv) definierte Abhängigkeit auf (s.o.), somit ist ihr Betrag insbesondere streng monoton steigend in der Geschwindigkeit v. Die querbeschleunigungsabhängige Bremsverzögerung axy ist hierbei dargestellt in Abhängigkeit der Querbeschleunigung ay, und weist vorliegend die in Gleichung (iii) definierte Abhängigkeit auf (s.o.), somit ist ihr Betrag streng monoton fallend in der Querbeschleunigung ay. Die Geschwindigkeit v und die Querbeschleunigung ay werden hierbei insbesondere in oben beschriebener Weise durch die Radsensoren 18 bzw. den Querbeschleunigungssensor 16 erfasst.

Die abstandsabhängige Bremsverzögerung axd ist dargestellt in Abhängigkeit eines Abstands d zu einem kritischen Objekt, welches in einer kritischen Fahrsituation insbesondere durch das Objekt gegeben sein kann, mit welchem die Kollision droht, oder durch ein weiteres Objekt, mit welchem ebenfalls eine Kollision drohen könnte, oder welches infolge seiner Nähe zur Trajektorie des Kfz 2 bei der Planung der optimalen Bremsverzögerung zu berücksichtigen ist. Im vorliegenden Fall ist die abstandsabhängige Bremsverzögerung axd für einen verschwindenden Abstand d ausgehend von einem Initialwert admax mit maximalem Betrag der Bremsverzögerung zunächst konstant bis hin zu einem Abstandswert d1. Zwischen dem Abstandwert d1 und einem Abstandswert d2 > d1 nimmt der Betrag der abstandsabhängigen Bremsverzögerung |axd| ab bis auf einen minimalen Betragswert bei admin, und ist für Abstände d > d2 konstant. Dieser Verlauf trägt dem Umstand Rechnung, dass der Betrag der Bremsverzögerung a priori umso größer zu wählen ist, je näher ein kritisches Objekt sich befindet, jedoch die Bremsverzögerung aus Gründen der Fahrphysik einen Maximalbetrag (welcher admax festlegt) nicht überschreiten sollte.

Die reibungsabhängige Bremsverzögerung ax$\mu$ ist in Abhängigkeit der Reibung $\mu$ dargestellt, und ihr Betrag ist in dieser Variablen monoton steigend. Vorliegend ist die reibungsabhängige Bremsverzögerung ax$\mu$ für eine verschwindende Reibung $\mu = 0$ und eine Umgebung $\mu$ bis zu einem Minimalwert $\mu$lo der Reibung ebenfalls Null, was dem Umstand Rechnung trägt, dass bei verschwindender oder sehr geringer Reibung keine nennenswerte Bremskraft auf die Fahrbahn übertragen werden kann. Dies ist erst ab dem Minimalwert $\mu$lo in nennenswertem Maß möglich. Für Reibungswerte $\mu >$ $\mu$lo steigt der Betrag der reibungsabhängigen Bremsverzögerung $|ax\mu|$ an (vorliegend linear), bis ab einer Obergrenze $\mu$hi der Reibung $\mu$ die reibungsabhängige Bremsverzögerung ax$\mu$ bei a$\mu$max ihr Betragsmaximum einnimmt und beibehält. besagtes Betragsmaximum kann insbesondere festgelegt sein durch eine maximal mögliche Bremskraft-übertragung. Für die Ermittlung des konkreten Wertes der Reibung $\mu$ werden insbesondere die durch die Radsensoren 18 des Kfz 2 ermittelten Kräfte an den Rädern herangezogen.

Die objektabhängige Bremsverzögerung axo ist in Abhängigkeit einer Objektbeschleunigung aob des besagten kritischen Objektes (also insbesondere eines anderen Fahrzeugs) dargestellt, welche vorzugsweise durch die Steuereinheit 20 aus den Daten 19 der durch die Verkehrssensorik 6 erfassten Verkehrssituation ermittelt wird. Die objektabhängige Bremsverzögerung axo wiest im Wesentlichen einen zur abstandsabhängigen Bremsverzögerung axd vergleichbaren Verlauf auf, jedoch mit gegensätzlichem Monotonieverhalten, was dem Umstand Rechnung trägt, dass eine kritische Fahrsituation mit abnehmendem Abstand d eines kritischen Objektes "kritischer" wird (also die Kollisionsgefahr steigt), und/oder mit zunehmender Beschleunigung aop des kritischen Objekts.

Die optimale Bremsverzögerung kann nun aus den hier genannten Größen in oben bereits beschriebener funktionaler Abhängigkeit ermittelt werden, insbesondere nach Gleichung (v) (wobei die Maximum- und Minimumbildung insbesondere durch geeignete p-Normen oder vergleichbare Operationen ausdehnbar sind).

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 2 | Kfz |
| 4 | Notfallsystem zur Kollisionsvermeidung |
| 6 | Verkehrssensorik |
| 7 | Frontkamera |
| 8 | Heckkamera |
| 9 | Sensor |
| 10 | Bildwinkel |
| 12 | Bildwinkel |
| 14 | Auswerteeinheit |
| 15 | Kraftsensorsystem |
| 16 | Querbeschleunigungssensor |
| 18 | Radsensor |
| 20 | Steuereinheit |

| | |
|---|---|
| aob | Objektbeschleunigung |
| axd | abstandsabhängige Bremsverzögerung |
| axo | objektabhängige Bremsverzögerung |
| axv | geschwindigkeitsabhängige Bremsverzögerung |
| axy | querbeschleunigungsabhängige Bremsverzögerung |
| ax$\mu$ | reibungsabhängige Bremsverzögerung |
| ay | Querbeschleunigung |

**Patentansprüche**

1. Verfahren zum Anpassen einer Bremsverzögerung für ein Kraftfahrzeug (2),
   wobei das Kraftfahrzeug (2) ein Notfallsystem (4) zur Kollisionsvermeidung mit einer zugehörigen Verkehrssensorik (6) zum Erfassen einer Verkehrssituation und ein Kraftsensorsystem (15) zum Erfassen von am Kraftfahrzeug (2) und/oder an einzelnen Achsen und/oder Rädern jeweils wirkenden Kräften umfasst,

   - wobei in Reaktion auf eine durch das Notfallsystem (4) erfasste kritische Fahrsituation ein Ausweichmanöver eingeleitet wird, und für das Ausweichmanöver eine optimale Bremsverzögerung ermittelt wird,
- wobei eine aktuelle Fahrgeschwindigkeit (v) des Kraftfahrzeugs (2) ermittelt wird, und mittels des Kraftsensorsystems (15) ein Wert einer Querbeschleunigung (ay) des Kraftfahrzeugs (2) ermittelt wird,
- wobei anhand des Wertes der Querbeschleunigung (ay) ein Sollwert einer querbeschleunigungsabhängigen Bremsverzögerung (axy) bestimmt wird, und anhand der Fahrgeschwindigkeit (v) ein Sollwert einer geschwindigkeitsabhängigen Bremsverzögerung (axv) bestimmt wird, und
- wobei die optimale Bremsverzögerung anhand des Sollwertes der querbeschleunigungsabhängigen Bremsverzögerung (axy) und des Sollwertes der geschwindigkeitsabhängigen Bremsverzögerung (axv) derart ermittelt wird, dass die optimale Bremsverzögerung als mathematische Funktion der Variablen Fahrgeschwindigkeit (v) und Querbeschleunigung (ay) ein entgegengesetztes Monotonieverhalten bezüglich dieser Variablen aufweist.

2. Verfahren nach Anspruch 1,
wobei die optimale Bremsverzögerung derart ermittelt wird, dass sie für einen minimalen Betrag der querbeschleunigungsabhängigen Bremsverzögerung (axy) maximal wird, und/oder für einen maximalen Betrag der querbeschleunigungsabhängigen Bremsverzögerung (axy) minimal.

3. Verfahren nach Anspruch 1 oder Anspruch 2,
wobei die optimale Bremsverzögerung als eine konvexe Funktion der querbeschleunigungsabhängigen Bremsverzögerung (axy) und/oder als eine konkave Funktion der geschwindigkeitsabhängigen Bremsverzögerung (axv) ermittelt wird.

4. Verfahren nach einem der vorhergehenden Ansprüche,

   wobei die optimale Bremsverzögerung ermittelt wird anhand

   - eines gewichteten Mittelwertes, und/oder
   - einer p-Norm, und/oder
   - einer Extremwertbildung,

   in welche jeweils wenigstens die Sollwerte der querbeschleunigungsabhängigen Bremsverzögerung (axy) und der geschwindigkeitsabhängigen Bremsverzögerung (axv) eingehen.

5. Verfahren nach einem der vorhergehenden Ansprüche,
wobei die querbeschleunigungsabhängige Bremsverzögerung (axy) gebildet wird anhand des Quadrates der Querbeschleunigung (axy) und anhand eines Initialwertes.

6. Verfahren nach einem der vorhergehenden Ansprüche,

   wobei mittels der Verkehrssensorik (6) ein Abstand (d) zu einem kritischen Objekt der kritischen Fahrsituation erfasst wird, und anhand des besagten Abstands (d) ein Sollwert einer abstandsabhängigen Bremsverzögerung (axd) ermittelt wird,
   wobei Ermittlung der optimalen Bremsverzögerung auch anhand des Sollwertes der abstandsabhängigen Bremsverzögerung (axd) erfolgt, und
   wobei die optimale Bremsverzögerung als mathematische Funktion der Variablen Abstand (d) dasselbe Monotonieverhalten aufweist wie bezüglich der Variablen Querbeschleunigung (ay).

7. Verfahren nach einem der vorhergehenden Ansprüche,

   wobei mittels der Verkehrssensorik (6) eine Objektbeschleunigung (aob) des oder eines kritischen Objekts ermittelt wird, und anhand der Objektbeschleunigung (obj) ein Sollwert einer objektabhängigen Bremsverzögerung (axo) ermittelt wird,
   wobei die Ermittlung der optimalen Bremsverzögerung auch anhand des Sollwertes der optimalen Bremsverzögerung (axo) erfolgt, und
   wobei die optimale Bremsverzögerung als mathematische Funktion der Variablen Objektbeschleunigung (aob) ein entgegengesetztes Monotonieverhalten aufweist als bezüglich der Variablen Querbeschleunigung (ay).

8. Verfahren nach einem der vorhergehenden Ansprüche,

wobei mittels des Kraftsensorsystems (15) ein Wert einer Reibung ($\mu$) für das Kraftfahrzeug (2) auf einer Straße ermittelt wird, und anhand des besagten Wertes der Reibung ($\mu$) ein Sollwert einer reibungsabhängigen Beschleunigung (ax$\mu$) ermittelt wird,

wobei die Ermittlung der optimalen Bremsverzögerung auch anhand des Sollwertes der reibungsabhängigen Bremsverzögerung (ax$\mu$) erfolgt, und

wobei die optimale Bremsverzögerung als mathematische Funktion der Variablen Reibung ($\mu$) ein entgegengesetztes Monotonieverhalten aufweist als bezüglich der Variablen Querbeschleunigung (ay).

9. Verfahren nach Anspruch 8, rückbezogen auf alle vorangehenden Ansprüche,

wobei die optimale Bremsverzögerung gebildet wird anhand eines Maximums aus

- dem Sollwert der querbeschleunigungsabhängigen Bremsverzögerung (axy),
- dem Sollwert der reibungsabhängigen Bremsverzögerung (ax$\mu$) und
- einer weiteren Funktion,

welche ihrerseits gebildet wird anhand eines Minimums aus

- dem Sollwert der abstandsabhängigen Bremsverzögerung (axd),
- dem Sollwert der geschwindigkeitsabhängigen Bremsverzögerung (axv) und
- dem Sollwert der objektabhängigen Bremsverzögerung (axo).

10. Kraftfahrzeug (2) mit einem Notfallsystem (4) zur Kollisionsvermeidung, welches eine zugehörige Verkehrssensorik (6) zum Erfassen einer Verkehrssituation und einen Kraftsensorsystem (15) zum Erfassen von am Kraftfahrzeug (2) und/oder an einzelnen Achsen und/oder Rädern jeweils wirkenden Kräften umfasst, wobei das Notfallsystem (4) dazu eingerichtet ist, das Verfahren nach einem der Ansprüche 1 bis 9 durchzuführen.

**Fig. 1**

Fig. 2

Europäisches
Patentamt
European
Patent Office
Office européen
des brevets

## EUROPÄISCHER RECHERCHENBERICHT

Nummer der Anmeldung

EP 25 19 9579

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2005 002760 A1 (VOLKSWAGEN AG [DE]) 11. August 2005 (2005-08-11) * Absätze [0021], [0048] * * Absätze [0052], [0053] * * Abbildungen 4,5 * ----- | 1-10 | INV. B60T7/22 B60T8/1755 B60W30/095 |
| A | DE 10 2013 008073 A1 (VOLKSWAGEN AG [DE]) 13. November 2014 (2014-11-13) * Ansprüche 1-10 * * Abbildung 1 * ----- | 1,10 | |
| A | DE 10 2005 054754 A1 (BAYERISCHE MOTOREN WERKE AG [DE]) 24. Mai 2007 (2007-05-24) * Absatz [0022] * * Abbildung 2 * ----- | 1,10 | |
| A | DE 10 2009 020649 A1 (DAIMLER AG [DE]) 18. November 2010 (2010-11-18) * Abbildungen 3,4 * ----- | 1,10 | |
| | | | RECHERCHIERTE SACHGEBIETE (IPC) B60T B60W |

Der vorliegende Recherchenbericht wurde für alle Patentansprüche erstellt

| Recherchenort | Abschlußdatum der Recherche | Prüfer |
|---|---|---|
| München | 12. Januar 2026 | Colonna, Massimo |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 25 19 9579

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2026

| Im Recherchenbericht angeführtes Patentdokument | Datum der Veröffentlichung | Mitglied(er) der Patentfamilie | Datum der Veröffentlichung |
|---|---|---|---|
| DE 102005002760 A1 | 11-08-2005 | KEINE | |
| DE 102013008073 A1 | 13-11-2014 | KEINE | |
| DE 102005054754 A1 | 24-05-2007 | KEINE | |
| DE 102009020649 A1 | 18-11-2010 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015205673 A1
- DE 102008005305 A1